(19) Europäisches Patentamt
European Patent Office
Office européen des brevets

(11) Publication number: **0 411 218 A1**

(12) **EUROPEAN PATENT APPLICATION**

(21) Application number: **89307811.3**

(51) Int. Cl.$^5$: **A01N 25/10**, A01N 47/12

(22) Date of filing: **01.08.89**

(43) Date of publication of application:
**06.02.91 Bulletin 91/06**

(84) Designated Contracting States:
**AT BE CH DE ES FR GB GR IT LI LU NL SE**

(71) Applicant: **ICI AMERICAS INC.**
**Concord Pike & New Murphy Roadoad**
**Wilmington Delaware 19897(US)**

(72) Inventor: **Kraft, Paul**
**6, Imperial Lane**
**Spring Valley New York 10977(US)**
Inventor: **Scher, Herbert Benson**
**1028 Wickham Drive**
**Moraga California 94556(US)**
Inventor: **Teach, Eugene Gordon**
**1929 Downey Place**
**El Cerrito California 94539(US)**

(74) Representative: **Downes, John Edward et al**
**Imperial Chemical Industries PLC Legal**
**Department: Patents Po Box 6**
**Welwyn Garden City Herts, AL7 1HD(GB)**

(54) **Thermoplastic polymer primarily plasticized with herbicide.**

(57) The present invention relates to compositions formed by mixing herbicides with polymers. The herbicide acts, as a primary plasticizer, to plasticize the resin and exudes from the resin/herbicide composition over a period of time. The polymer/herbicide composition can be in the form of an aqueous latex, suitable for coating of a substrate, can be in the form of a plasticised resin capable of being formed into articles of manufacture (eg. lawn edging), or can be in the form of an extrudable plasticized latex which can be directly applied to the soil locus (e.g. to a trench) and allowed to stand. Control over the amount and type of surfactant used in the manufacture of the polymer with which the herbicide is to be mixed can influence the rate and amount of herbicide that exudes from the composition.

EP 0 411 218 A1

# THERMOPLASTIC POLYMER PRIMARILY PLASTICIZED WITH HERBICIDE

## BACKGROUND OF THE INVENTION

### Field of the Invention

The present invention relates to polymer/herbicide compositions which are useful in weed control.

## DESCRIPTION OF THE PRIOR ART

It is known to blend vinylic thermoplastic polymers with certain types of hydrolyzable organophosphorous pesticides (i.e., volatile insecticides) which have a plasticizing effect upon the vinylic resins. For example, U.S. Patent No. 3,318,769 to F.B. Folckemer et al. describes the use of certain dialkyl halovinyl phosphate insecticides as plasticizers for vinylic resins. Such insecticides, when used in the resin formulations described in that patent, evaporate from the surface of the resin into the surrounding atmosphere. As the insecticide evaporates or leaves the resin body, additional insecticide migrates from the body of the resin formulation to the surface, replacing the evaporated insecticide. Such resin formulations are described as providing controlled release of the insecticide into the surrounding air or environment for a considerable period of time.

Thiolcarbamate herbicides are a well-known class of herbicides and are described in various patents and prior art publications. Exemplary is U.S. Patent No. 2,913,327 to H. Tilles et al. which describes representative thiolcarbamate herbicides. It has been proposed that thiolcarbamate herbicides be mixed with petroleum wax dispersions to provide for weed control during preplanting, preemergence, and postemergence of desired crops (U.S. Patent No. 3,154,402 to R. H. Salvesen et al.). Such compositions were formed by melting the wax and admixing the thiolcarbamate with the molten wax. A wax-soluble dispersing agent or a dispersing agent which can be solubilized is then added. This composition can then be added to warm water and homogenized. It has not been appreciated that thiolcarbamate herbicides can function as primary plasticizers for the distinctly differing class of vinylic thermoplastic resins, for example, that are to be described hereinafter.

It is known, from Hyacinth Control Journal, Vol. 10, May 1972, to mix a herbicide [(2,4-dichlorophenoxy)acetic acid or "2,4-D" as it is commonly termed] with a previously prepared plastisol comprising PVC resin and dioctyl phthalate primary plasticizer. The resulting mixture was cured into rod-like products which were cut into pellets for later addition to water containing Eurasian watermilfoil. The herbicide which was used was not described as functioning as a primary plasticizer for the resin in view of the presence of conventional dioctyl phthalate in large enough amounts to function as the primary plasticizer.

## SUMMARY OF THE PRESENT INVENTION

The present invention relates to a polymer having mixed therein a herbicide which functions as a primary plasticizer for the resin. The composition of resin and herbicide allows for gradual release of the herbicide into the soil or surrounding environment in a controlled manner, for example, if care is taken in regard to the type of residual surfactant present in the resin from its manufacture or if the surfactant is post added to the herbicide after its manufacture.

The polymer/herbicide composition is useful in making articles of manufacture (e.g., lawn or garden edging) which are useful in preventing the spread of undesired plant growth.

Another embodiment of the present invention involves plasticized polymer compositions wherein the primary plasticizer is the herbicide which can be used to coat a desired substrate and allowed to dry leaving behind the polymer/herbicide composition. The herbicide will migrate from the polymer, over time, to provide for control of undesired vegetation adjacent the locus of the polymer/herbicide composition. Yet another embodiment involves plasticized latex compositions which can be extruded and allowed to dry.

## DETAILED DESCRIPTION OF THE PRESENT INVENTION

The present invention, in its broadest context, is directed to the admixture of a herbicide and a polymer under conditions wherein the herbicide is a primary plasticizer and by itself exerts a substantial plasticizing effect on the polymer making it supple enough, if desired, to be fabricated into appropriate articles of manufacture which, when placed in or adjacent the soil, are useful for control of undesired plant growth. For example, such articles of manufacture can be used as lawn or gardening edging to prevent the undesired spread of grass into flower beds, around fence posts, mailbox posts, adjacent walkways, decks, and the like. If desired, the plasticized composition of resin and herbicide can be pelletized and spread over that area of the soil where it is desired that undesired growth be controlled.

Alternatively, the polymer/herbicide composition can be in the form of either an extrudable composition or a latex-like coating for application to the soil or a desired substrate. Over a certain period of time, these extrudable or latex coatings will become more dry as they become reduced in regard to their moisture content and the herbicide will gradually begin to migrate out from the herbicide/polymer composition.

As used herein, the term "herbicide" is intended to be limited to those agents which are capable of controlling the undesired growth of vegetation and yet be capable of plasticizing the selected resin so that it is capable of being processed, if desired, into appropriate articles of manufacture for plant control use, e.g., by the consumer in the home and garden market or be capable of being extruded or used as a coating. Such herbicides must be sufficiently volatile to gradually be released from the polymer at a rate sufficient to supply a growth inhibitory amount of the herbicide to the vegetation that is desired to be controlled. They must also be substantially non-hydrolyzable into an inactive form when in contact with moisture adjacent or in the soil. The herbicide must be capable of acting as a primary plasticizer for the polymer and must therefore be compatible enough therewith to allow for high enough loadings of herbicide in the polymer to insure a controlled release of herbicide for a sufficiently long and desired period of time. Any resin that is selected for use in connection with the present invention will have only a finite ability to absorb plasticizer until it becomes an overplasticized mass lacking the needed integrity for conventional polymer forming operations, if such are desired. The use of herbicide as the primary plasticizer allows for desired higher loadings of such a composition to the resin without the attendant substantial dilution effect if another material (e.g., dioctyl phthalate) were used as the primary plasticizer. Higher loadings of herbicide can, for example, give the resulting article of polymer/herbicide enhanced effect in regard to either or both the strength and duration of herbicide release.

Although the description that follows will describe the present invention in connection with certain preferred polymers (e.g., a vinylic thermoplastic resin such as polyvinyl chloride) and herbicides (e.g., a thiolcarbamate), it is to be understood that other compatible polymer/herbicide combinations can be used in accordance with the present invention.

The thiolcarbamate herbicides, which are preferably intended for use in regard to the present invention, include those which are known to persons of ordinary skill in the art. Representative compounds of this class have the formula:

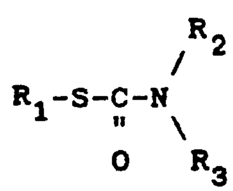

where $R_1$ is a lower alkyl radical and $R_2$ and $R_3$ are lower alkyl groups which have at least three carbon atoms. $R_2$ and $R_3$ may be a single alkyl group having at least five carbon atoms and having two bonds available for attachment to the nitrogen atom. Representative compounds of this type are shown in U.S. Patent No. 2,913,327, which is incorporated herein by reference. Generally speaking, the amount of thiolcarbamate herbicide which can be used in the compositions of the present invention can range anywhere from about 20 to about 200 parts by weight per hundred parts by weight of resin depending upon the amount of plasticization desired.

The vinylic thermoplastic resins which form another component of a preferred embodiment of the present invention are those resins whose monomers were polymerized through their vinylic double bond. These resins can be typlified by the polyvinyl halides, such as polyvinyl chloride, polyvinylidene chloride and polyvinyl fluoride; the polyacrylate and polymethacrylate esters, such as polymethacrylate and polymethylmethacrylate; the polyvinyl benzenes such as polystyrene and polymerized vinyl toluene; and polyvinyl acetate. Because it combines the most desirable physical properties with the most compatibility for the thiolcarbamate herbicides, the most preferred resin for most uses is polyvinyl chloride.

Since the polymers which form one component of the present composition are generally made in aqueous solution using appropriate surfactants, another aspect of the present invention can be the selection of a resin having the desired amount and type of surfactant, should a surfactant be desired at all, so as to control the rate at which the herbicide releases from the resin/herbicide composition into the soil or environment. It is possible to control the release by either adding plasticizer, in case the resin is polymerized in a solvent, or by controlling the type used. For example, if no residual plasticizer is present in the resin the least amount of herbicide will leach out of the composition into the soil. The use of an oil loving surfactant will allow for a greater degree of herbicide to leach from the resin/herbicide composition. Use of a water loving surfactant in the process of manufacture of the resin will allow the greatest amount of herbicide to leach from the resin/herbicide composition at the most rapid rate. Use of a secondary plasticizer, e.g., dioctyl phthalate, which is mutually soluble in both the herbicide and polymer can also be added to dilute the herbicide levels and thereby control the rate of release of the herbicide as well as the cost of the polymer/herbicide composition. Such a secondary plasticizer would be used in lesser amount than the amount of herbicide used and would be properly viewed as either a subsidiary or secondary plasticizer, rather than a primary plasticizer, for the resin. In certain cases it may be necessary to fuse the polymer/herbicide composition, if in the form of a plastisol, at elevated temperature (e.g., 200°C) if it is desired to yield a solid product (e.g., a film) which can be appropriately treated (e.g., cut or diced to a desired size).

If such a fusion step undesirably causes volatilization of too much herbicide, it is possible to use the following low temperature process. In regard to this low temperature process, which forms another embodiment of the present invention, a high solids, room temperature film forming polymer latex (e.g., GEON 652 brand of a PVC copolymer resin is intended for use) is pre-plasticized by the addition of the herbicide to any desired level (e.g., 10-75 parts herbicide per 100 parts by weight of latex). The resulting latex can be coated onto a substrate and allowed to air dry leaving behind a film of polymer which is primarily plasticized with the herbicide. If desired the coating can be carried out onto the eventual carrier for the polymer/herbicide film. Examples of carriers include paper, non-woven fabrics, cloth, plastics and wood. Examples of latex products containing suitable polymers include latex products containing PVC homo- and copolymers, styrene resins, acrylic resins, styrene-acrylonitrile resins, polyvinyl acetate, and styrene-butadiene rubber.

If EPTAM brand herbicide is to be added to a PVC latex, the herbicide can be pre-plasticized by blending, with high agitation, a mixture of 65 grams EPTAM herbicide and 2 grams of octylphenoxyethanol containing about five oxyethylene units with a mixture of 34 grams of deionized water and 3 grams of octylphenoxyethanol having about nine to ten oxyethylene units. The resulting emulsion of EPTAM herbicide can be slowly added to a PVC latex with high speed stirring to give a latex/herbicide composition suitable for use as a coating.

It is also possible to practice another embodiment of the present invention by use of an elevated temperature film forming polymer (e.g., GEON 151 brand) wherein the polymer has a relatively high Tg (e.g., a Tg of about 70°C). In this embodiment, an aqueous latex of such a polymer is admixed with the herbicide to form a pre-plasticized latex along the lines previously described in regard to the room temperature film forming polymer latex. If such a latex is applied to a locus (e.g., a trench in the soil) it dries without forming a film. Rather, the dried form will be in the form of finely divided polymer particles containing the herbicide as a plasticizer. These particles can be mixed in the soil, for example, to provide a means for the gradual release of herbicide therefrom. If the polymer particles are suitably pigmented (e.g., brown) using such pigments as iron oxide, and the like, their presence in the desired locus can be concealed if desired for aesthetic reasons.

If an extrudable product is desired, the amount of herbicide used as the plasticizer can be adjusted to produced the desired composition. An extrudable, plasticized latex product can be directly applied, e.g., from a squeeze bottle or spray can, to the locus of the soil, e.g., in a suitable trench, and allowed to dry to a more rigid formulation and gradually release herbicide from the polymer/herbicide composition. The product can have the consistency of a putty-like formulation in this embodiment.

The foregoing illustrates certain embodiments of the present invention. The Examples which follow set forth certain particular embodiments thereof.

## EXAMPLE 1

60 and 100 parts per hundred of ethyl N,N-di-n-propyl thiolcarbamate herbicide (EPTAM brand from

Stauffer Chemical Company) were mixed with 100 parts of dispersion grade polyvinyl chloride (SCC-20 brand from Stauffer Chemical Company) to form a fluid plastisol which upon fluxing on a hot plate produced a clear glass polyvinyl film. This film is capable of use in agriculture applications or can be diced or sliced into strips or pelletized.

## EXAMPLE 2

Suspension grade polyvinyl chloride resin (SCC-608 from Stauffer Chemical Company), 100 parts by weight, was placed in a reactor with 200 parts by weight of water and was slurried. When the agitation was stopped two layers formed, i.e., polyvinyl chloride resin and water. At this point ethyl N,N-di-n-propyl thiolcarbamate (EPTAM brand from Stauffer Chemical Company) was then added, 50 parts per hundred, without agitation. At this point three distinct layers were observed. The carbamate herbicide formed the top layer, the water, the intermediate layer and the PVC resin the lower layer. The composition was agitated and the PVC layer became swollen with the thiolcarbamate plasticizer. When the stirring was stopped only two layers remained, a water layer and a swollen polyvinyl chloride resin layer on the bottom of the container. The organic thiolcarbamate layer was gone.

## EXAMPLE 3

The herbicide-swollen polyvinyl chloride product, in particulate form, from Example 2 was spread around one-half of a mound of earth surrounding a new mailbox post that had been placed in the ground. The other half of the mound was left untreated. The particles of herbicide-plasticized resin were worked into the soil with a rake. This treatment occurred in April. Between May and August, the normal growing season for grass and weeds, no weed or grass growth was noted in the treated area of the mound, whereas normal weed and grass growth was noted in the untreated area.

## EXAMPLE 4

Six samples of a film product were produced in two varying dimensions from three formulations. The dimensions of the film strips were:

A: 5 inch length x 0.5 in. width x 0.25 in. thickness

B: 5 inch length x 0.5 inch width x 0.167 inch thickness

The ingredients used were mixed to form a fluid plastisol which was fluxed on a hot plate to form the film. The ingredients (weight percentages) were:

| | 1 | 2 | 3 |
|---|---|---|---|
| Herbicide* | 50% | 35% | 15% |
| PVC resin | 50% | 65% | 65% |
| Dioctyl phthalate | - | - | 20% |

*ethyl-N,N-di-n-propylthiolcarbamate

## EXAMPLE 5

Ethyl-N,N-di-n-propylthiolcarbamate herbicide was added to polyvinyl acetate latex at about 20%, by weight, to form a composition which was applied to wood strips (5 in. x 1.125 in. x 0.25 in.). The water in the herbicide/latex composition was allowed to evaporate producing a dried polyvinyl acetate coating

containing about 33.4% herbicide was produced. Each wood strip contained 1.4 grams of the herbicide.

The foregoing should not be construed in a limiting sense since those Examples are merely intended to show certain embodiments of the present invention. The scope of protection that is desired is set forth in the claims which follow.

## Claims

1. A composition which comprises a polymer admixed with a herbicidally and plasticizingly effective amount of a herbicide, as a primary plasticizer for the polymer, so that the composition is suitable, when placed adjacent to or in the soil, to control the undesired growth of vegetation.

2. A composition as claimed in Claim 1 wherein the amount of herbicide that is present ranges from about 20 to about 200 parts per hundred by weight per 100 parts by weight of resin.

3. A composition as claimed in Claim 1 wherein the thiolcarbamate has the formula:-

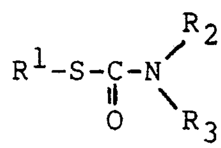

wherein $R^1$ is a lower alkyl radical and each of $R_2$ and $R_3$ is a lower alkyl group which has at least three carbon atoms,or $R_2$ and $R_3$ may be a single alkyl group having at least five carbon atoms and having two bonds available for attachment to the nitrogen atom.

4. A composition as claimed in Claim 1 wherein the resin is polyvinyl chloride and the herbicide is ethyl N,N-di-n-propyl thiolcarbamate.

5. A composition as claimed in Claim 1 which is in plasticized latex form so as to be capable of extrusion.

6. A composition as claimed in Claim 1 which is in solid, pelletized form.

7. A composition as claimed in Claim 1 which is in the form of an aqueous latex.

8. A method of controlling the unwanted growth of vegetation in a locus which comprises applying to the locus a composition which comprises a polymer admixed with a herbicidally and plasticizingly effective amount of a herbicide, which acts as a primary plasticizer for the polymer.

9. A method of forming a polymer which contains a herbicidally and plasticizingly effective amount of a herbicide, as a primary plasticizer for the polymer, which comprises forming a mixture of water, resin and herbicide and thereafter supplying sufficient agitation thereto to incorporate said amount of herbicide into the polymer.

10. A method of forming a coating composition which comprises mixing a herbicide with a latex of polymer to primarily plasticize the polymer within the herbicide.

European Patent Office

# EUROPEAN SEARCH REPORT

Application Number

EP 89 30 7811

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 064 379 (UNIROYAL INC.)<br>* Page 4, line 13; page 5, lines 19-24; page 5, line 36 - page 6, line 6; page 9, lines 5,29-33; claims 1,10,14-16 * | 1-4,6,8 | A 01 N 25/10<br>A 01 N 47/12 |
| X | US-A-4 087 273 (C.M. GARRISON et al.)<br>* Column 5, lines 5-6; claims * | 1-3,6,8 | |
| X | GB-A- 658 222 (B.F. GOODRICH CO.)<br>* Page 4, lines 7-32,51-72; claims 1-2 * | 1-2,5-7,9-10 | |
| A | FR-A-1 404 681 (SHELL INTERNATIONALE RESEARCH MAATSCHAPIJ N.V.)<br>* Page 3, right-hand column, lines 51-58 * & US-A-3 318 769 (Cat. D) | 1-10 | |

TECHNICAL FIELDS SEARCHED (Int. Cl.5)

A 01 N

The present search report has been drawn up for all claims

| Place of search | Date of completion of the search | Examiner |
|---|---|---|
| THE HAGUE | 12-04-1990 | RAVANEL C.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)